# EUROPEAN PATENT APPLICATION

(11) **EP 2 845 914 A1**
(43) Date of publication of application: **11.03.2015**
(21) Application number: 13782076.7
(22) Date of filing: 23.04.2013
(51) Int. Cl.: C22B 1/16, F27B 21/08, B22F 3/10

(54) **SINTERING DEVICE AND SINTERING METHOD USING INDUCTION HEATING**

(30) Priority: 27.04.2012 KR 20120044843
(71) Applicant: Posco, Gyeongsangbuk-do 790-300 (KR)
(72) Inventor: KANG, Young Ju, Pohang-si Gyeongsangbuk-do 790-300 (KR); JU, Dong Seon, Pohang-si, Gyeongsangbuk-do 790-300 (KR); SHIN, Dong Yeop, Pohang-si Gyeongsangbuk-do 790-300 (KR); SEO, Jeong Do, Pohang-si Gyeongsangbuk-do 790-300 (KR)
(74) Representative: Zech, Stefan Markus
(86) International application number: PCT/KR2013/003462
(87) International publication number: WO 2013/162253

(57) **Abstract**

Disclosed are a sintering device and method using induction heating capable of inducing heating of highly conductive materials included in raw ore through magnetic induction of an induction coil to heat the raw ore. The sintering device using induction heating inductively heats raw ores to produce sintered ores, and includes an induction case and a heating inductor which is mounted in the induction case and induces the heating of the raw ores that is housed in or passes through the induction case through magnetic induction.

## Description

### [Technical Field]

The present invention relates, in general, to a sintering device and method using induction heating and, more particularly, to a sintering device and method using induction heating, capable of inducing heating of highly conductive materials included in raw ores through magnetic induction to sinter the raw ores.

### [Background Art]

In general, a sintering process carried out at a sintering plant in a steelworks is a process of fusing mixed materials that are ore fines to produce sintered ores having a particle size within a predetermined range. The produced sintered ores are charged into a blast furnace as one of main materials for producing steel products.

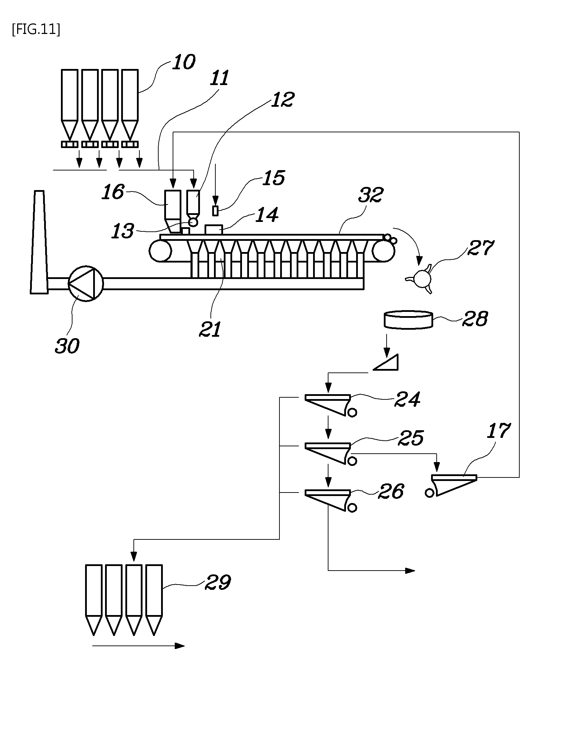

For example, in a typical sintering process as shown in FIG. 11, different materials, ore fines, coke fines are discharged from respective storage bins 10 at a predetermined ratio, are mixed at a mixer 11, and are stored in a surge hopper 12. The mixed materials of the surge hopper 12 and a hearth layer stored in a hearth layer hopper 16 are charged into a sintering machine 32 at a predetermined ratio. Then, the mixed materials and the hearth layer charged into the sintering machine 32 are ignited at surface layers thereof using an ignition furnace 14, and are sintered downward from the surface layers by downward suction of a draught fan 30 connected to wind boxes 21 below the sintering machine 32. The sintered ores sintered in this way are crushed at a crusher 27, and are cooled at a cooler 28. Then, the cooled sintered ores pass through primary to tertiary screens 24 to 26 having different meshes in turn. The sintered ores having a particle size within an appropriate range are stored in storage bins 29, and the other sintered ores that do not have such a particle size are recollected on a hearth layer return feeder 17, are stored in the hearth layer hopper 16, and are used as the hearth layer.

With regard to this, reference to an "Apparatus for screening hearth layer and materials of sintering machine (Korean Unexamined Patent Application Publication No. 10-2003-0049455)" is made.

In the case of this related art, since relatively inexpensive iron ore fines are used, this is advantageous in the aspect of cost savings. However, vacuum equipment and a mixer are separately required to suction air and secure porosity. Further, due to the use of heat burning cokes, a large quantity of carbon dioxide (CO₂) is generated to cause environmental pollution. There is also a limitation on increasing the propagation speed of flames.

### [Documents of Related Art]

(Patent Document 1) Korean Unexamined Patent Application Publication No. 10-2003-0049455
{Patent Document 2) Japanese Unexamined Patent Application Publication No. 2000-328104

### [Disclosure]

### [Technical Problem]

Accordingly, the present invention has been made keeping in mind the above problems occurring in the prior art, and an object of the present invention is to provide a sintering device and method using induction heating, capable of inducing heating of highly conductive materials included in coking ores through electromagnetic induction to sinter the coking ores.

### [Technical Solution]

In order to accomplish the above object, the present invention provides a sintering device using induction heating, which inductively heats raw ores to produce sintered ores. The sintering device includes: an induction case; and a heating inductor that is mounted in the induction case and induces the heating of the raw ores, which are contained in the induction case or pass through the induction case, through magnetic induction.

In order to accomplish the above object, the present invention provides a sintering device using induction heating, which inductively heats raw ores to produce sintered ores. The sintering device includes: endless track trucks on which the raw ores are loaded and which move on endless track wheels along an endless track; and a heating inductor that is installed close to the endless track trucks and induces the heating of the raw ores loaded on the endless track trucks through magnetic induction.

The sintering device may further include an ignition furnace igniting a surface layer of the raw ores, and wind boxes that are installed below the endless track trucks and sinter the raw ores ignited by downward suction.

The induction case may have a separate heater installed therein.

The heater may be formed to surround an outer circumferential surface of the induction case.

The heater may be formed in a rod shape so as to be able to be mounted in the center of the induction case.

The raw ores may further include carbon based materials containing at least one of fine coal and cokes in addition to iron ore.

The raw ores may additionally include at least one of an iron particle, a magnet, a semiconductor, graphite, and an electrolytic liquid.

The heater may be formed of at least one selected from silica carbide, zirconia, and graphite.

In order to accomplish the above object, the present invention provides a sintering method using induction heating which includes: charging raw ores containing highly conductive materials into an induction case; inducing heating of the highly conductive materials through magnetic induction to heat the raw ores; and discharging sintered ores sintered by the heating of the raw ores from the induction case.

In order to accomplish the above object, the present invention provides a sintering method using induction heating which includes: continuously transferring raw ores containing highly conductive materials; inducing heating of the highly conductive materials included in the continuously transferred raw ores through magnetic induction to heat the raw ores; and discharging sintered ores sintered by the heating of the raw ores.

The raw ores may be heated while being vertically transferred using gravity.

The sintering method may further include igniting and sintering the raw ores using a hot blast at the same time when the raw ores are heated.

The raw ores may further include iron based materials, carbon based materials including copper and aluminum, and semiconductor based materials including silicon dioxide, in addition to iron ores.

The process of heating the raw ores may include inducing the heating of the highly conductive materials through magnetic induction, and simultaneously applying heat to the raw ores using a separate heater.

The raw ores may be charged in a pellet shape.

### [Advantageous Effects]

According to the present invention, the following outstanding effects can be obtained.

First, the present invention can remarkably reduce the carbon dioxide (CO₂) generated in the sintering process, and simplify or remove separate configuration such as vacuum equipment and a mixer.

Second, the present invention can reduce an amount of cokes and increase an application of low grade ores, thereby improving cost competitive power of an iron making process and increasing a sintering speed to improve productivity.

### [Description of Drawings]

FIGS. 1 and 2 are configuration diagrams showing a sintering device using induction heating according to a first embodiment of the present invention.
FIG. 3a is a configuration diagram showing a modification of the first embodiment of the present invention.
FIG. 3b is a configuration diagram showing another modification of the first embodiment of the present invention.
FIG. 4 is a configuration diagram showing a sintering device using induction heating according to a second embodiment of the present invention.
FIG. 5 is a configuration diagram showing a sintering device using induction heating according to a third embodiment of the present invention.
FIG. 6 shows a state in which raw ores having a pellet shape are sintered.
FIG. 7 is a configuration diagram showing a sintering device using induction heating according to a fourth embodiment of the present invention.
FIG. 8 is a block diagram showing a sintering method using induction heating according to a first embodiment of the present invention.
FIG. 9 is a block diagram showing a sintering method using induction heating according to a second embodiment of the present invention.
FIG. 10 is a block diagram showing a sintering method using induction heating according to a third embodiment of the present invention.
FIG. 11 is a configuration diagram showing a typical sintering process.

### [Best Mode]

Above all, it should be noted that, in adding reference numbers to components of each drawing, the same components are given the same reference numbers as far as possible although indicated on the other drawings. Further, in describing the present invention, specific descriptions of well-known functions and structures incorporated herein may be omitted to avoid obscuring the subject matter of the present invention.

Hereinafter, exemplary embodiments of the present invention will be described in detail with reference to the accompanying drawings.

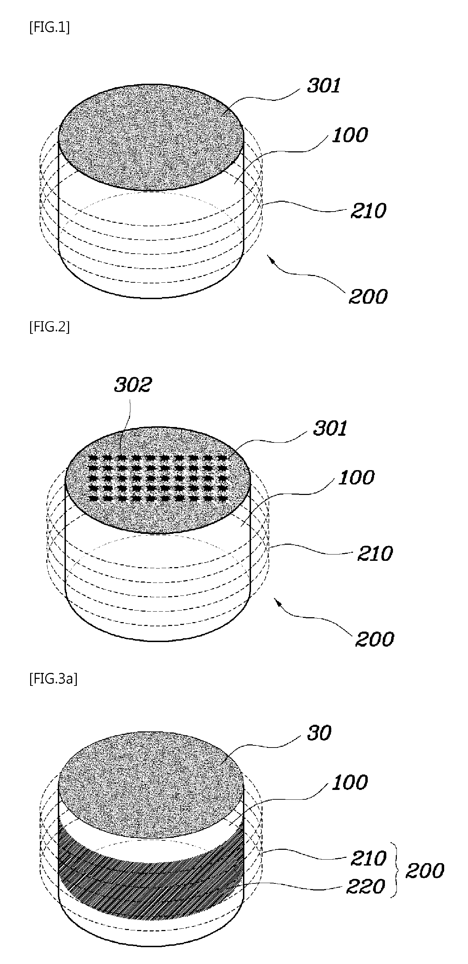

FIGS. 1 and 2 show a sintering device using induction heating according to a first embodiment of the present invention.

A sintering device and method using induction heating according to the present invention induce heating of highly conductive materials included in coking ores through magnetic induction using a change in magnetic field so as to allow the coking ores to be sintered.

As shown in FIG. 1, a sintering device using induction heating according to a first embodiment of the present invention generally includes an induction case 100 in which raw ores 301 are contained, and a heating inductor 200 that induces the heating of the raw ores 301 through magnetic induction.

In detail, the induction case 100 is a container in which the raw ores 301 to be sintered are contained. The raw ores 301 are charged through an open upper portion of the induction case 100, and are contained in a space formed inside the induction case 100.

The induction case 100 is mounted with the heating inductor 200 for inducing the heating of highly conductive materials included in the raw ores 301. The heating inductor 200 may be installed to wind an induction coil 210 on an outer circumferential surface of the induction case 100 so as to be able to induce the heating of the raw ores 301 through the magnetic induction.

The raw ores 301 charged into the induction case 100 so as to be able to be heated by the magnetic induction of the induction coil 210 are configured to include highly conductive materials at which the magnetic induction can occur. The highly conductive materials included in the raw ores 301 basically include iron particles, or iron based materials.

In the present embodiment, each raw ore 301 includes 57.8% iron components. The iron components FeO and Fe₃O₄ having magnetism, and correspond to conductive materials.

Thus, when power is applied to the induction coil 210 with the raw ores 301 contained in the induction case 100, the highly conductive materials, i.e. the iron components, included in the raw ores 301 can be heated through the magnetic induction of the induction coil 210.

As shown in FIG. 2, to reinforce conductivity required for induction heating, the raw ores 301 charged into the induction case 100 may include carbon based materials including copper and aluminum or semiconductor based materials including silicon dioxide (SiO₂), in addition to the iron based materials.

In detail, various materials such as the iron based materials such as iron particles, magnets, semiconductor based materials, graphite based materials, and electrolytic liquid such as salt water may be additionally charged.

Particularly, when the raw ores 301 are mixed and heated with the iron based materials at a proper ratio, Fe-C masses made up of the raw ores 301 and carbons are formed, so that it is possible to replace cokes.

The heating inductor 200 is configured to induce the heating of the raw ores 301 in the induction case 100 through the magnetic induction. In the present embodiment, the induction coil 210 wound around the outer circumferential surface of the induction case 100 is used. The power applied to the induction coil 210 is adjusted by an external controller, and when the power is applied to the induction coil 210, the induction coil 210 enables the raw ores 301 to be heated through the magnetic induction with the highly conductive materials included in the raw ores 301.

The induction coil 210 may be disposed around the induction case 100 in various shapes. For example, the induction coil 210 may be wound around on the outer circumferential surface of the induction case 100, be embedded in a sidewall of the induction case 100, or be wound around on an inner circumferential surface of the induction case 100.

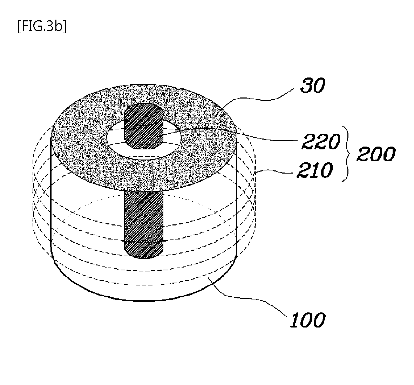

As shown in FIGS. 3a and 3b, the sintering device using induction heating of the present invention is preferably configured such that a separate heater is installed in the induction case.

The separate heater 220 is formed of at least one selected from silica carbide, zirconia, and graphite. The heater 220 is formed to apply heat to the raw ores 301 in the induction case 100.

As shown in FIG. 3a, the heater 220 may be formed to wind the outer circumferential surface of the induction case 100.

Further, as shown in FIG. 3b, a hole may be formed in the center of the induction case 100 in which the raw ores 301 are contained, and the heater 220 may be formed in a rod shape so as to be able to be mounted in the hole. The heater 220 is not limited to this structure. The heater 220 may be installed at various positions of the induction case 100 as long as it can reinforce the conductivity.

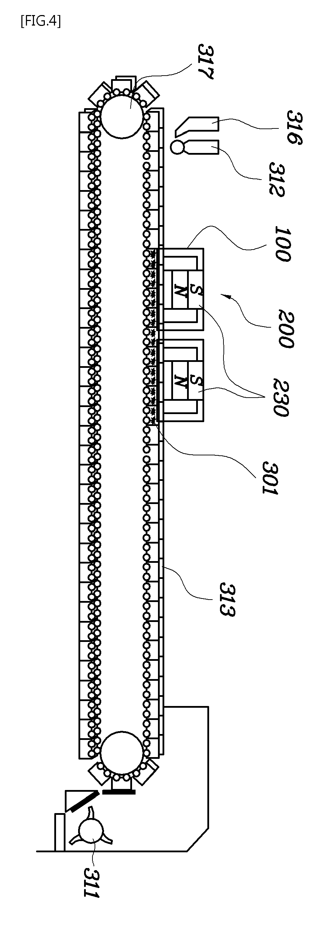

FIG. 4 shows a sintering device using induction heating according to a second embodiment of the present invention.

As shown in FIG. 4, a sintering device using induction heating according to a second embodiment of the present invention includes endless track wheels 317 disposed horizontally, endless track trucks 313 moving on the endless track wheels 317, and at least one heating inductor 200 that is installed close to the endless track trucks 313 and induces heating of the raw ores 301 loaded on the endless track trucks 313.

To be more specific, the induction case 100 is installed close to the endless track trucks 313 on which the raw ores 301 are loaded in the shape of a cover capable of covering the raw ores 301. The endless track trucks 313 move in a horizontal direction according to an operation of the endless track wheels 317.

Particularly, the induction case 100 is provided with the heating inductor 200 that induces the heating of the raw ores 301 through magnetic induction with the raw ores 301. Thereby, the raw ores 301 loaded on the endless track trucks 313 moved by the endless track wheels 317 are sintered by the heating.

The heating inductor 200 preferably includes an induction electromagnet 230 installed in the induction case 100. As described above, the raw ores 301 may additionally include various materials such as iron based materials such as iron particles, magnets, semiconductor based materials, graphite based materials, and electrolytic liquids such as salt water such that a heating effect caused by the magnetic induction of the raw ores 301 can be further increased.

The raw ores 301 passing through a surge hopper 312 and a hearth layer hopper 316 are loaded on the endless track trucks 313, and move in the horizontal direction according to the operation of the endless track wheels 317. The raw ores 301 are inductively heated according to a change in magnetic field of the induction electromagnet 230 installed in the induction case 100 while passing through the induction case 100 installed close to the endless track trucks 313. Thereby, the raw ores 301 are spontaneously heated and sintered.

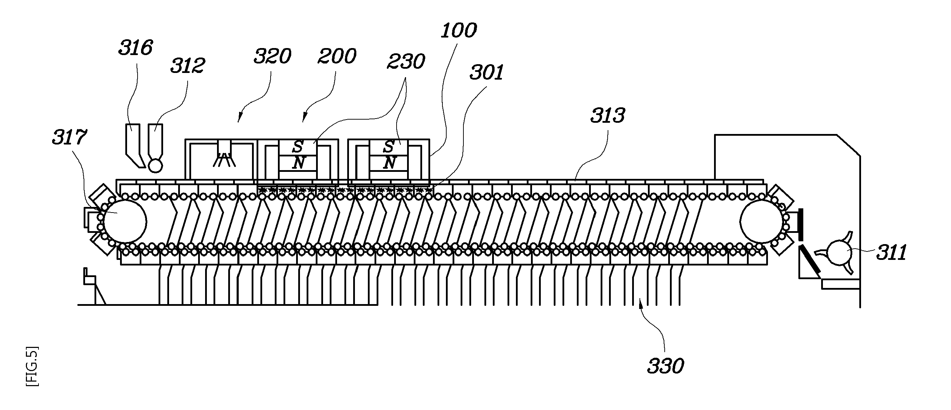

FIG. 5 shows a sintering device using induction heating according to a third embodiment of the present invention.

As shown in FIG. 5, a sintering device using induction heating of the present invention includes endless track trucks 313 moved by endless track wheels 317, at least one heating inductor 200 that is installed close to the endless track trucks 313 and induces heating of raw ores 301 loaded on the endless track trucks 313 through magnetic induction, an ignition furnace 320 igniting a surface layer of the raw ores 301, and wind boxes 330 that are installed below the endless track trucks 313 and suctions and provide air toward the raw ores 301 through downward suction.

The heating inductor 200 is installed in an induction case 100 installed close to the endless track trucks 313, and may be configured to include an induction electromagnet 230. The ignition furnace 320 is provided in front of the induction case 100 such that the surface layer of the raw ores 301 is ignited.

In this way, the sintering device using induction heating of the present invention sinters the raw ores 301 based on the downward suction using the ignition furnace 320 and the wind boxes 330, and heats the raw ores 301 themselves based on the magnetic induction using the heating inductor 200, thereby carrying out a sintering process.

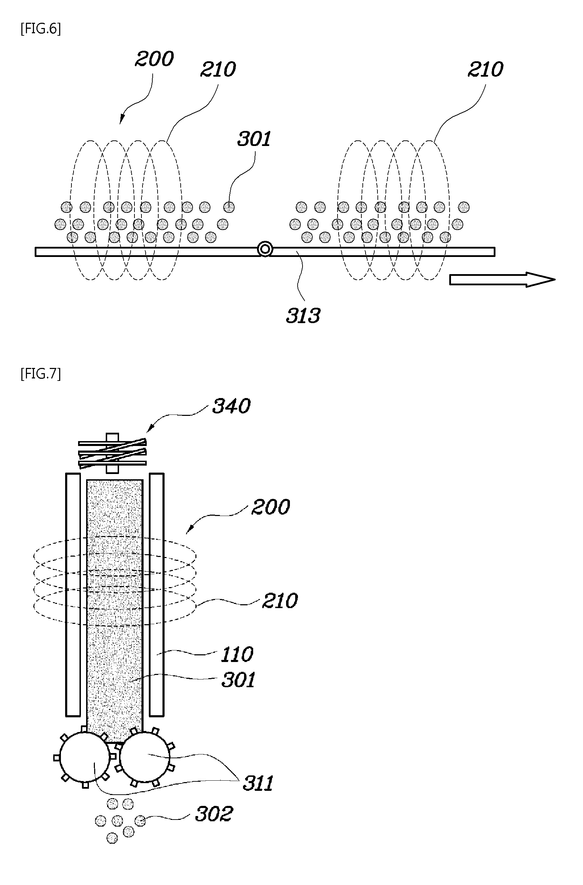

As shown in FIG. 6, the heating inductor 200 may be an induction coil 210 installed in a moving direction of the endless track trucks 313. A molding machine (not shown) is installed in a step before the endless track trucks 313 pass through the induction coil 210, and supplies the raw ores 301 in a pellet shape so as to be able to further improve sintering efficiency caused by the magnetic induction.

Thereby, molded ores 302 molded in a pellet shape by the molding machine continue to pass through the induction coil 210, and are thereby spontaneously heated and sintered.

FIG. 7 shows a sintering device using induction heating according to a fourth embodiment of the present invention.

As shown in FIG. 7, a sintering device using induction heating according to a fourth embodiment of the present invention includes a charging facility 340 charging raw ores 301, a pair of induction pipes 110 that are vertically disposed below the charging facility 340 at a predetermined interval, an induction coil 210 wound on an outer circumferential surface of the induction pipes 110, and a crusher 311 crushing sintered ores discharged between the induction pipes 110.

In detail, when the raw ores 301 are charged between the induction pipes 110 by the charging facility 340, the raw ores 301 are inductively heated and sintered by magnetic induction of the induction coil 210 provided for the induction pipes 110 while continuously passing between the induction pipes 110. The sintered ores can be crushed while passing through the crusher 311.

Meanwhile, a sintering method using induction heating according to the present invention is performed by passing through steps of charging raw ores into an induction case, heating the raw ores through magnetic induction of an induction coil, and discharging the sintered ores sintered by the heating of the raw ores from the induction case.

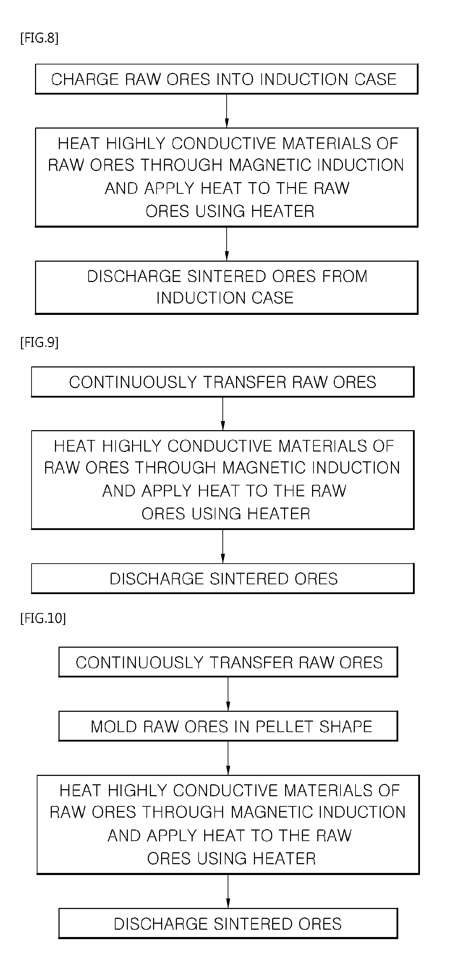

FIG. 8 is a block diagram showing a sintering method using induction heating according to a first embodiment of the present invention.

As shown in FIG. 8, a sintering method according to a first embodiment of the present invention charges raw ores containing highly conductive materials into an induction case, induces heating of the highly conductive materials through magnetic induction of an induction coil and simultaneously applies heat to the raw ores using a separate heater, and discharges the sintered ores sintered by the heating of the raw ores from the induction case.

Here, the raw ores charged into the induction case include carbon based materials including copper and aluminum or semiconductor based materials including silicon dioxide (SiO₂), in addition to iron based materials so as to be able to reinforce conductivity required for the induction heating.

FIG. 9 is a block diagram showing a sintering method using induction heating according to a second embodiment of the present invention.

As shown in FIG. 9, a sintering method according to a second embodiment of the present invention continues to move raw ores containing highly conductive materials, induces heating of the highly conductive materials through magnetic induction of an induction coil and simultaneously applies heat to the raw ores using a heater, and discharges the sintered ores sintered by the heating of the raw ores.

The continuous movement of the raw ores is possible in a vertical or horizontal direction. When the raw ores move in the horizontal direction, the endless track wheels and trucks as described above may be used. When the raw ores move in the vertical direction, the induction pipes, on the outer circumferential surface of which the induction coil is wound, may be used.

Meanwhile, a third embodiment of the sintering method using induction heating according to the present invention is a combination of the first and second embodiments, and can be called a hybrid method.

This hybrid method continues to move raw ores containing highly conductive materials in a horizontal direction, heats the highly conductive materials included in the continuously moving raw ores through magnetic induction and simultaneously heats the raw ores, ignites and sinters the raw ores using a hot blast, and discharges the sintered ores.

In brief, the sintering caused by the magnetic induction and the sintering using the ignition furnace are performed at the same time.

As shown in FIG. 10, the sintering method using induction heating according to the present invention may further include a step of molding the transferred raw ores in a pellet shape in the process of continuously transferring the raw ores.

In this way, the raw ores molded in a pellet shape may be inductively heated and sintered by the magnetic induction caused by the induction electromagnet or the induction coil while continuously moving. Thus, induction heating efficiency can be further improved.

Each embodiment of the aforementioned sintering method using induction heating according to the present invention may further include a process in which at least one selected from carbon based materials including copper and aluminum and semiconductor based materials including silicon dioxide, in addition to iron based materials is included in the raw ores. Furthermore, each embodiment of the aforementioned sintering method using induction heating according to the present invention preferably induces the heating of the highly conductive materials through the magnetic induction and simultaneously applies the heat to the raw ores using the separate heater.

Due to this process, it is possible to further improve the induction heating efficiency as well as productivity.

As described above, the present invention can remarkably reduce the carbon dioxide (CO₂) generated in the sintering process, simplify or remove separate configuration such as vacuum equipment and a mixer, and improve cost competitive power of an iron making process due to a decrease in amount of cokes and an increase in application of low grade ores.

While exemplary embodiments of the present invention have been described with reference to the drawings, the present invention is not limited to these embodiments. Accordingly, the present invention is only limited by the scope of the appended claims. Further, those skilled in the art will appreciate that various modifications, additions and substitutions are possible, without departing from the scope and spirit of the invention.

### [List of Reference Numbers]

| | |
|---|---|
| 100: induction case | 200: heating inductor |
| 210: induction coil | 220: heater |
| 301: raw ore | 302: molded ore |
| 311: crusher | 312: surge hopper |
| 313: endless track truck | 316: hearth layer hopper |
| 317: endless track wheel | 320: ignition furnace |
| 330: wind box | 340: charging facility |

## Claims

1. A sintering device using induction heating, which inductively heats raw ores to produce sintered ores, the device comprising:
an induction case; and
a heating inductor that is mounted in the induction case and induces the heating of the raw ores, which are contained in the induction case or pass through the induction case, through magnetic induction.

2. A sintering device using induction heating, which inductively heats raw ores to produce sintered ores, the device comprising:
endless track trucks on which the raw ores are loaded and which move on endless track wheels along an endless track; and
a heating inductor that is installed close to the endless track trucks and induces the heating of the raw ores loaded on the endless track trucks through magnetic induction.

3. The sintering device according to claim 2, further comprising:
an ignition furnace igniting a surface layer of the raw ores; and
wind boxes that are installed below the endless track trucks and sinter the raw ores ignited by downward suction.

4. The sintering device according to claim 1, wherein the induction case has a separate heater installed therein.

5. The sintering device according to claim 4, wherein the heater is formed to surround an outer circumferential surface of the induction case.

6. The sintering device according to claim 4, wherein the heater is formed in a rod shape so as to be able to be mounted in the center of the induction case.

7. The sintering device according to claim 1 or 2, wherein the raw ores further include carbon based materials containing at least one of fine coal and cokes in addition to iron ore.

8. The sintering device according to claim 1 or 2, wherein the raw ores additionally include at least one of an iron particle, a magnet, a semiconductor, graphite, and an electrolytic liquid.

9. The sintering device according to claim 4, wherein the heater is formed of at least one selected from silica carbide, zirconia, and graphite.

10. A sintering method using induction heating, comprising:
charging raw ores containing highly conductive materials into an induction case;
inducing heating of the highly conductive materials through magnetic induction to heat the raw ores; and
discharging sintered ores sintered by the heating of the raw ores from the induction case.

11. A sintering method using induction heating, comprising:
continuously transferring raw ores containing highly conductive materials;
inducing heating of the highly conductive materials included in the continuously transferred raw ores through magnetic induction to heat the raw ores; and
discharging sintered ores sintered by the heating of the raw ores.

12. The sintering method according to claim 10, wherein the raw ores are heated while being vertically transferred using gravity.

13. The sintering method according to claim 11, further comprising igniting and sintering the raw ores using a hot blast at the same time when the raw ores are heated.

14. The sintering method according to claim 10 or 11, wherein the raw ores further include iron based materials, carbon based materials including copper and aluminum, and semiconductor based materials including silicon dioxide, in addition to iron ores.

15. The sintering method according to claim 10 or 11, wherein the heating of the raw ores includes inducing the heating of the highly conductive materials through the magnetic induction and simultaneously applying heat to the raw ores using a separate heater.

16. The sintering method according to claim 10 or 11, wherein the raw ores are charged in a pellet shape.
